# EUROPÄISCHE PATENTSCHRIFT

(11) **EP 1 655 513 B1**
(45) Veröffentlichungstag und Bekanntmachung des Hinweises auf die Patenterteilung: **21.03.2007**
(21) Anmeldenummer: 05022740.4
(22) Anmeldetag: 19.10.2005
(51) Int. Cl.: F16H 25/22, F16H 25/24

(54) **Verstellvorrichtung**
Positioning device
Dispositif de déplacement

(30) Priorität: 05.11.2004 DE 102004054037
(43) Veröffentlichungstag der Anmeldung: 10.05.2006
(73) Patentinhaber: Stabilus GmbH, 56070 Koblenz (DE)
(72) Erfinder: Gerhardt, Axel, 56332 Wolken (DE)
(74) Vertreter: Klein, Thomas

(56) Entgegenhaltungen:
- WO-A-02/02390
- DE-A1- 3 629 281
- DE-A1- 19 542 453
- DE-A1- 19 625 761
- DE-A1- 19 700 225
- US-A- 4 337 671
- US-A- 5 027 667
- US-A- 6 098 479
- US-A1- 2003 101 836
- US-B1- 6 450 913

## Beschreibung

Die Erfindung bezieht sich auf eine Verstellvorrichtung gemäß der Oberbegriffen des Ansprüche 1 und 2.

Derartige Verstellvorrichtungen sind aus der DE 36 29 281 A1 bekannt. Dabei ist eine Verstellung nur mittels des das Umlaufgetriebe antreibenden Drehantriebs möglich.

Bei einer Verstellvorrichtung ist eine verdrehgesicherte Antriebsspindel als Verstellbauteil bekannt, die durch ein Planetenrollengetriebe gegenüber einer an ihrer Innenseite mit Gewindegängen versehenen Hohlwelle verschiebbar ist, wobei die Hohlwelle als Läufer eines Elektromotors dient.

Dabei ist von Nachteil, daß für eine große Verstellänge auch die Hohlwelle und damit ein drehbar angetriebenes Bauteil eine große Baulänge besitzen muß.

Aus der US-A-5 027 667 ist ein Federaktuator bekannt, bei dem eine Linearbewegung eines von einem Druckmittel beaufschlagten Kolbens in eine Rotationsbewegung einer Welle oder umgekehrt übertragen wird.

Aufgabe der Erfindung ist es eine Verstellvorrichtung der eingangs genannten Art zu schaffen, die bei einfachem Aufbau einen geringen Bauraum benötigt und eine Unterstützung oder Alternative zum Drehantrieb aufweist.

Diese Aufgabe wird erfindungsgemäß dadurch gelöst, daß das Verstellrohr abgedichtet aus dem hülsenartigen Gehäuse herausgeführt und an seinem aus dem hülsenartigen Gehäuse herausragenden Ende verschlossen ist und daß der Innenraum des hülsenartigen Gehäuses mit einem unter Vordruck stehenden Gas gefüllt oder das Verstellbauteil von einer Druckfeder in Ausfahrrichtung beaufschlagt ist.

Eine weitere Lösung besteht darin, daß das Verstellrohr abgedichtet aus dem hülsenartigen Gehäuse herausgeführt und an seinem aus dem hülsenartigen Gehäuse herausragenden Ende verschlossen ist und daß der Innenraum des hülsenartigen Gehäuses mit einem unter Vordruck stehenden Gas gefüllt oder das Verstellbauteil von einer Druckfeder in Ausfahrrichtung beaufschlagt ist.

Das Verstellrohr ist dabei gegen Eindringen von Verschmutzungen geschützt.

Durch die Füllung des Innenraums des hülsenartigen Gehäuses mit einem unter Vordruck stehenden Gas, kann eine Ausfahrbewegung des Verstellrohres entweder nur durch den Gasdruck oder durch den Gasdruck unterstützt von dem Drehantrieb erfolgen.

Eine Unterstützung der Ausfahrbewegung des Verstellbauteils ist auch dadurch erreichbar, daß das Verstellbauteil von einer Druckfeder in Ausfahrrichtung beaufschlagt ist.

Da die drehbeweglichen Bauteile sich mit dem Verstellbauteil axial bewegen, können sie eine geringe Baulänge besitzen.

Das Kugelumlaufgetriebe und Planetenrollengetriebe ermöglichen ein hohes Verhältnis von Kraftübertragung zu Bauraum, wobei unter hoher Untersetzung die Linearbewegung ausgeführt wird. Die Untersetzung ist so hoch, daß auf eine zusätzliche Getriebestufe meist verzichtet werden kann.

Da bei dem Planetenrollengetriebe ein Abwälzen der Planetenrollen in dem Gewinde erfolgt, sind nur geringe Reibverluste vorhanden, so daß der aufgewandte Energieeinsatz weitgehend verlustfrei der Verstellung dient. Der Drehantrieb kann daher relativ gering und damit bauraumsparend ausgelegt sein.

Die geringen Reibverluste führen auch dazu, daß das Planetenrollengetriebe nicht selbsthemmend ist und so auch eine leichte manuelle Verstellbarkeit der zueinander verstellbaren Teile gegeben ist.

Die Planetenrollen tragen wesentlich zu einer Steifigkeit der Verstellvorrichtung bei.

Von der koaxialen Antriebswelle kann ein Rollenkäfig um die Längsachse drehbar antreibbar sein, der die mehreren zur Längsachse des hülsenartigen Gehäuses parallelen Achsen besitzt, auf denen jeweils die Planetenrollen mit dem Profil des Gewindes entsprechenden Rillen frei drehbar gelagert sind.

Zur gleichmäßigen Kraftübertragung sind vorzugsweise die Achsen gleichmäßig auf einem Kreis verteilt angeordnet.

Ist das Verstellbauteil ein Verstellrohr, in dessen Rohrinnerem der Drehantrieb angeordnet ist, so entspricht der maximale Verstellhub annähernd der Baulänge der Verstellvorrichtung in eingeschobenem Zustand.

Der Drehantrieb kann ein Elektromotor, insbesondere ein Gleichstrommotor sein.

Um auch höhere Verstellkräfte problemlos übertragen zu können, kann der Rollenkäfig axial über ein Axiallager, insbesondere ein Axialwälzlager an dem Verstellrohr abgestützt sein.

Der Rollenkäfig kann eine Käfigplatte besitzen, die auf der Antriebswelle drehfest angeordnet ist und an der die sich axial erstreckenden Achsen mit ihrem einen Endbereich befestigt sind.

Zu einer hohen Stabilität des Rollenkäfigs können die der Käfigplatte entgegengesetzten Enden der Achsen an einer zweiten Käfigplatte befestigt sein.

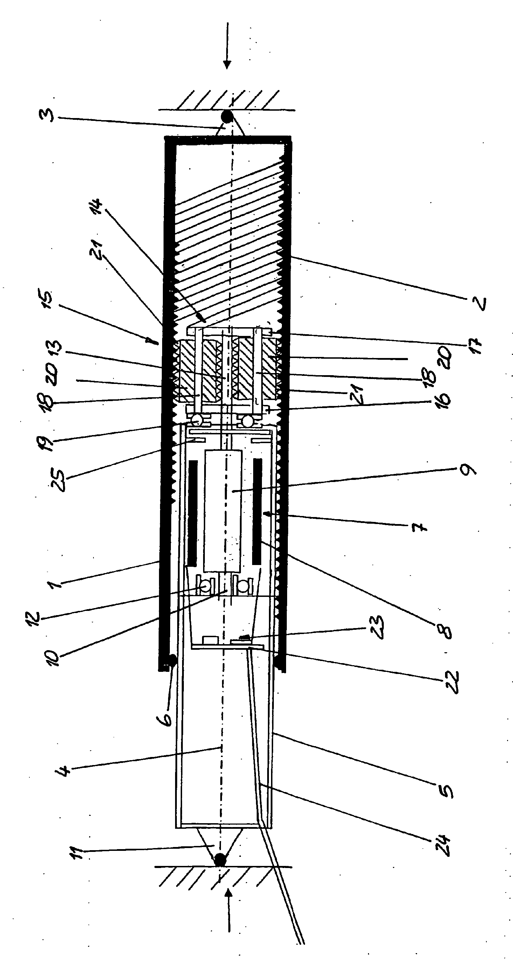

Ein Ausführungsbeispiel der Erfindung ist in der Zeichnung dargestellt und wird im folgenden näher beschrieben. Die einzige Figur der Zeichnung zeigt eine Verstellvorrichtung im Querschnitt.

Die dargestellte Verstellvorrichtung besitzt ein hülsenartiges Gehäuse 1, das an seinem einen Ende verschlossen und an seiner zylindrischen Innenwand mit einem Gewinde 2 versehen ist.

An seinem verschlossenen Ende besitzt das Gehäuse 1 ein Anschlußstück 3, mit dem es an einem feststehenden Bauteil wie z.B. der Karosserie eines Fahrzeugs um seine Längsachse 4 verdrehsicher schwenkbar befestigt ist.

An dem Gehäuse 1 ist ein Verstellrohr 5 angeordnet, das mit seinem einen verschlossenen Endbereich aus dem offenen Ende des Gehäuses 1 durch eine Ringdichtung 6 abgedichtet herausgeführt ist und über ein weiteres Anschlußstück 11 an einem bewegbaren Bauteil wie z.B. einer an der Karosserie eines Fahrzeugs schwenkbar angelenkten Klappe um seine Längsachse 4 verdrehsicher schwenkbar befestigt ist.

Das Verstellrohr 5 ist in Richtung der Längsachse 4 im Gehäuse 1 bewegbar angeordnet. In dem Verstellrohr 5 ist ein Gleichstrommotor 7 angeordnet, dessen Motorspulen als Stator 8 fest an der Innenwand des Verstellrohres 5 angeordnet sind und einen koaxial zur Längsachse 4 drehbar gelagerten, mit Permanentmagneten versehenen Rotor 9 umschließen.

Die Rotorwelle 10 des Rotors 9 ist an ihrem dem Anschlußstück 11 zugewandten Ende über ein Radialwälzlager 12 in dem Verstellrohr 5 drehbar gelagert.

Das dem Anschlußstück 3 zugewandte Ende der Rotorwelle 10 bildet eine Antriebswelle 13 für einen Rollenkäfig 14 eines Planetenrollengetriebes 15.

Der Rollenkäfig 14 besteht aus einer auf der Antriebswelle 13 fest angeordneten ersten Käfigplatte 16 und einer im Abstand dazu ebenfalls fest auf der Antriebswelle 13 angeordneten zweiten Käfigplatte 17, die über gleichmäßig auf einem zur Längsachse 4 koaxialen Kreis verteilt angeordnete, zur Längsachse 4 parallele Achsen 18 miteinander verbunden sind.

Die erste Käfigplatte ist dabei über ein axiales Lager 19 axial an dem Verstellrohr 5 abgestützt.

Auf den Achsen 18 sind jeweils Planetenrollen 20 mit dem Profil des Gewindes entsprechenden Rillen 21 an ihrer zylindrischen Mantelfläche frei drehbar gelagert, die mit ihren dem Profil des Gewindes entsprechenden Rillen 21 in das Gewinde 2 eingreifen.

Auf einem Träger 22 ist in dem Verstellrohr 5 eine Ansteuerelektronik 23 angeordnet, von der eine Stromversorgungs- und Steuerleitung 24 nach außen führt. Von der Ansteuerelektronik 3, die auch einen Temperatursensor aufweisen kann, ist der Gleichstrommotor 7 zum Drehantrieb des Planetenrollengetriebes 15 ansteuerbar.

An dem Verstellrohr 5 ist weiterhin ein Hall-Sensor 25 angeordnet, durch den die Drehbewegung der Antriebswelle 13 erfaßbar und ein entsprechenden Signal der Ansteuerelektronik 23 zuführbar ist.

Der Innenraum von Gehäuse 1 und Verstellrohr 5 ist mit Stickstoffgas unter Vordruck gefüllt.

Zu einem Ausfahren des Verstellrohres 5 wird dieses kolbenartig von dem Stickstoffgas beaufschlagt und aus dem Gehäuse 1 heraus bewegt. Dabei laufen der Rotor 9 und die Planetenrollen 20 ohne wesentlichen Widerstand frei mit.

Zum Einfahren des Verstellrohres 5 wird von dem Gleichstrommotor 7 die Antriebswelle 13 und damit auch der Rollenkäfig 14 drehbar angetrieben. Dadurch wälzen die Planetenrollen 20 mit ihrer Außenverzahnung 21 in dem Gewinde 2 ab und bewegen das Verstellrohr 5 in das Gehäuse 1 hinein.

### Bezugszeichenliste

- 1: Gehäuse
- 2: Gewinde
- 3: Anschlußstück
- 4: Längsachse
- 5: Verstellrohr
- 6: Ringdichtung
- 7: Gleichstrommotor
- 8: Stator
- 9: Rotor
- 10: Rotorwelle
- 11: Anschlußstück
- 12: Radialwälzlager
- 13: Antriebswelle
- 14: Rollenkäfig
- 15: Planetenrollengetriebe
- 16: erste Käfigplatte
- 17: zweite Käfigplatte
- 18: Achsen
- 19: Axialwälzlager
- 20: Planetenrollen
- 21: Rillen
- 22: Träger
- 23: Ansteuerelektronik
- 24: Stromversorgungs- und Steuerleitung
- 25: Hall-Sensor

## Patentansprüche

1. Verstellvorrichtung zum Verstellen zweier Teile zueinander, mit einem feststehenden, hülsenartigen Gehäuse (1) und einem in dem Gehäuse angeordneten Verstellbauteil (5), das mit seinem einem Endbereich aus einer stirnseitigen Öffnung des hülsenartigen Gehäuses herausgeführt ist, mit einem Drehantrieb (8, 9), durch den über ein Umlaufgetriebe das Verstellbauteil axial zum hülsenartigen Gehäuse verstellbar ist, wobei das Umlaufgetriebe ein Kugelumlaufgetriebe und das hülsenartige Gehäuse verdrehsicher angeordnet sowie an seiner zylindrischen Innenwand mit einer gewindegangähnlichen Nut (2) versehen ist und wobei an dem ebenfalls verdrehgesicherten Verstellbauteil der Drehantrieb angeordnet ist, der eine zum hülsenartigen Gehäuse koaxiale Antriebswelle mit einer gewindegangähnlichen Nut besitzt, wobei das hülsenartige Gehäuse und die Antriebswelle durch in den gewindegangähnlichen Nuten angeordnete Kugeln miteinander gekuppelt sind, wobei das Verstellbauteil ein Verstellrohr (5) ist, das abgedichtet aus dem hülsenartigen Gehäuse (1) herausgeführt und an seinem aus dem hülsenartigen Gehäuse (1) herausragenden Ende verschlossen ist, **dadurch gekennzeichnet, dass** im Rohrinnerem der Verstellrohrs (5) der Drehantrieb angeordnet ist und daß der Innenraum des hülsenartigen Gehäuses (1) mit einem unter Vordruck stehenden Gas gefüllt oder das Verstellbauteil von einer Druckfeder in Ausfahrrichtung beaufschlagt ist.

2. Verstellvorrichtung zum Verstellen zweier Teile zueinander, mit einem feststehenden, hülsenartigen Gehäuse und einem in dem Gehäuse angeordneten Verstellbauteil (5), das mit seinem einem Endbereich aus einer stimseitigen Öffnung des hülsenartigen Gehäuses herausgeführt ist, mit einem Drehantrieb (8, 9), durch den über ein Umlaufgetriebe das Verstellbauteil axial zum hülsenartigen Gehäuse verstellbar ist, wobei das Umlaufgetriebe ein Planetenrollengetriebe (15) und das hülsenartige Gehäuse verdrehsicher angeordnet sowie an seiner zylindrischen Innenwand mit einem Gewinde versehen ist und wobei an dem ebenfalls verdrehgesicherten Verstellbauteil der Drehantrieb angeordnet ist, der eine zum hülsenartigen Gehäuse koaxiale Antriebswelle besitzt, von der ein oder mehrere Planetenrollen um die Längsachse des hülsenartigen Gehäuses oder dazu parallele Achsen drehbar antreibbar sind, auf denen jeweils Planetenrollen mit dem Profil des Gewindes entsprechenden Rillen frei drehbar gelagert sind, die mit ihren Rillen in das Gewinde des hülsenartigen Gehäuses eingreifen, wobei das Verstellbauteil ein Verstellrohr (5) ist, das abgedichtet aus dem hülsenartigen Gehäuse (1) herausgeführt und an seinem aus dem hülsenartigen Gehäuse (1) herausragenden Ende verschlossen ist, **dadurch gekennzeichnet, dass** im Rohrinnerem der Verstellrohrs (5) der Drehantrieb angeordnet ist und der Innenraum des hülsenartigen Gehäuses (1)mit einem unter Vordruck stehenden Gas gefüllt oder das Verstellbauteil von einer Druckfeder in Ausfahrrichtung beaufschlagt ist.

3. Verstellvorrichtung nach Anspruch 2, **dadurch gekennzeichnet, daß** ein Rollenkäfig um die Längsachse (4) frei drehbar gelagert ist, der die mehreren zur Längsachse des hülsenartigen Gehäuses (1) parallelen Achsen (18) besitzt, auf denen jeweils die Planetenrollen (20) mit dem Profil des Gewindes entsprechenden Rillen (21) frei drehbar gelagert sind, die von einer auf der Antriebswelle drehfest angeordneten Antriebsrolle drehbar antreibbar sind.

4. Verstellvorrichtung nach Anspruch 2, **dadurch gekennzeichnet, daß** von der koaxialen Antriebswelle (13) ein Rollenkäfig (14) um die Längsachse (4) drehbar antreibbar ist, der die mehreren zur Längsachse des hülsenartigen Gehäuses (1) parallelen Achsen (18) besitzt, auf denen jeweils die Planetenrollen (20) mit dem Profil des Gewindes entsprechenden Rillen (21) frei drehbar gelagert sind.

5. Verstellvorrichtung nach einem der Ansprüche 2 bis 4, **dadurch gekennzeichnet, daß** die Achsen (18) gleichmäßig auf einem Kreis verteilt angeordnet sind.

6. Verstellvorrichtung nach einem der vorhergehenden Ansprüche, **dadurch gekennzeichnet, daß** der Drehantrieb ein Elektromotor, insbesondere ein Gleichstrommotor (7) ist.

7. Verstellvorrichtung nach einem der 3 bis 6, **dadurch gekennzeichnet, daß** der Rollenkäfig (14) axial über ein Axiallager, insbesondere ein Axialwälzlager (19) an dem Verstellrohr (5) abgestützt ist.

8. Verstellvorrichtung nach einem der Ansprüche 3 bis 7, **dadurch gekennzeichnet, daß** der Rollenkäfig (14) eine Käfigplatte (16) besitzt, die auf der Antriebswelle (13) drehfest angeordnet ist und an der die sich axial erstreckenden Achsen (18) mit ihrem einen Endbereich befestigt sind.

9. Verstellvorrichtung nach Anspruch 8, **dadurch gekennzeichnet, daß** die der Käfigplatte (16) entgegengesetzten Enden der Achsen (18) an einer zweiten Käfigplatte (17) befestigt sind.

10. Verstellvorrichtung nach einem der Ansprüche 3 bis 9, **dadurch gekennzeichnet, daß** der Rollenkäfig über eine Getriebestufe von dem Drehantrieb drehbar antreibbar ist.

11. Verstellvorrichtung nach einem der vorhergehenden Ansprüche, **dadurch gekennzeichnet, daß** in dem Verstellrohr (5) eine Ansteuerelektronik (23) zum Ansteuern des Drehantriebs angeordnet ist.

12. Verstellvorrichtung nach Anspruch 11, **dadurch gekennzeichnet, daß** in dem Verstellrohr (5) ein Temperatursensor zum Erfassen der Temperatur in der Verstellvorrichtung angeordnet ist, dessen Ausgangssignal der Ansteuerelektronik (23) zuleitbar ist.

13. Verstellvorrichtung nach einem der vorhergehenden Ansprüche, **dadurch gekennzeichnet, daß** insbesondere in dem Verstellrohr (5) ein Drehzahlsensor zur Erfassung der Umdrehungen der Antriebswelle (13) oder des Rollenkäfigs angeordnet ist.

14. Verstellvorrichtung nach einem der vorhergehenden Ansprüche, **dadurch gekennzeichnet, daß** an dem dem Verstellbauteil abgewandten Ende des hülsenartigen Gehäuses (1)und/oder an dem dem hülsenartigen Gehäuse (1) abgewandten Ende des Verstellbauteils Anschlußstücke (3, 11) zur Befestigung an den zueinander zu verstellenden Teilen angeordnet sind.

15. Verstellvorrichtung nach einem der vorhergehenden Ansprüche, **dadurch gekennzeichnet, daß** das Verstellbauteil in einem Abstand zu einer Schwenkachse einer Klappe an der Klappe und das hülsenartige Gehäuse (1) an einem feststehenden Karosseriebauteil eines Kraftfahrzeugs angeordnet ist.

## Claims

1. Adjusting device for the mutual adjustment of two parts, comprising a fixed, sleeve-like housing (1) and an adjusting component (5) disposed in the housing, which adjusting component is led with its one end region out of an end-face opening in the sleeve-like housing, and comprising a rotary drive (8, 9), by which, via a planetary gearing, the adjusting component is adjustable axially to the sleeve-like housing, the planetary gearing being a recirculating ball gearing and the sleeve-like housing being disposed in a torsionally secure manner and being provided on its cylindrical inner wall with a thread-like groove (2), and the rotary drive being disposed on the likewise torsionally secured adjusting component, which rotary drive possesses a drive shaft coaxial to the sleeve-like housing and having a thread-like groove, the sleeve-like housing and the drive shaft being coupled together by balls disposed in the thread-like grooves and the adjusting component being an adjusting tube (5), which is led sealed out of the sleeve-like housing (1) and is closed off at its end projecting from the sleeve-like housing (1), **characterized in that** the rotary drive is disposed in the tube interior of the adjusting tube (5) and **in that** the interior of the sleeve-like housing (1) is filled with a precompressed gas or the adjusting component is acted on in the extension direction by a compression spring.

2. Adjusting device for the mutual adjustment of two parts, comprising a fixed, sleeve-like housing and an adjusting component (5) disposed in the housing, which adjusting component is led with its one end region out of an end-face opening in the sleeve-like housing, and comprising a rotary drive (8, 9), by which, via a planetary gearing, the adjusting component is adjustable axially to the sleeve-like housing, the planetary gearing being a planetary roller gearing (15) and the sleeve-like housing being disposed in a torsionally secure manner and being provided on its cylindrical inner wall with a thread, and the rotary drive being disposed on the likewise torsionally secured adjusting component, which rotary drive possesses a drive shaft coaxial to the sleeve-like housing, by which one or more planetary rollers can be driven rotatably about the longitudinal axis of the sleeve-like housing or axles parallel thereto on which, respectively, planetary rollers having flutes corresponding to the profile of the thread are mounted in a freely rotatable manner, which planetary rollers engage with their flutes in the thread of the sleeve-like housing, the adjusting component being an adjusting tube (5), which is led sealed out of the sleeve-like housing (1) and is closed off at its end projecting from the sleeve-like housing (1), **characterized in that** the rotary drive is disposed in the tube interior of the adjusting tube (5) and **in that** the interior of the sleeve-like housing (1) is filled with a precompressed gas or the adjusting component is acted on in the extension direction by a compression spring.

3. Adjusting device according to Claim 2, **characterized in that** a roller cage is mounted in a freely rotatable manner about the longitudinal axis (4), which roller cage possesses the plurality of axles (18) lying parallel to the longitudinal axis of the sleeve-like housing (1), on which axles, respectively, the planetary rollers (20), having flutes (21) corresponding to the profile of the thread, are mounted in a freely rotatable manner, the said planetary rollers being able to be rotatably driven by a drive roller disposed in a rotationally fixed manner on the drive shaft.

4. Adjusting device according to Claim 2, **characterized in that**, by the coaxial drive shaft (13), a roller cage (14) can be driven rotatably about the longitudinal axis (4), which roller cage possesses the plurality of axles (18) lying parallel to the longitudinal axis of the sleeve-like housing (1), on which axles, respectively, the planetary rollers (20), having flutes (21) corresponding to the profile of the thread, are mounted in a freely rotatable manner.

5. Adjusting device according to one of Claims 2 to 4, **characterized in that** the axles (18) are arranged evenly distributed on a circle.

6. Adjusting device according to one of the preceding claims, **characterized in that** the rotary drive is an electric motor, in particular a direct-current motor (7).

7. Adjusting device according to one of 3 to 6, **characterized in that** the roller cage (14) is axially supported against the adjusting tube (5) via an axial bearing, in particular an axial roller bearing (19).

8. Adjusting device according to one of Claims 3 to 7, **characterized in that** the roller cage (14) possesses a cage plate (16), which is disposed in a rotationally-fixed manner on the drive shaft (13) and to which the axially extending axles (18) are fastened with their one end region.

9. Adjusting device according to Claim 8, **characterized in that** those ends of the axles (18) which are opposite to the cage plate (16) are fastened to a second cage plate (17).

10. Adjusting device according to one of Claims 3 to 9, **characterized in that** the roller cage can be rotatably driven by the rotary drive, via a gear step.

11. Adjusting device according to one of the preceding claims, **characterized in that** in the adjusting tube (5) there is disposed a drive electronics (23) for driving the rotary drive.

12. Adjusting device according to Claim 11, **characterized in that** in the adjusting tube (5) there is disposed a temperature sensor for detecting the temperature in the adjusting device and the output signal of which can be fed to the drive electronics (23).

13. Adjusting device according to one of the preceding claims, **characterized in that** in the adjusting tube (5), in particular, there is disposed a rotation speed sensor for detecting the revolutions of the drive shaft (13) or of the roller cage.

14. Adjusting device according to one of the preceding claims, **characterized in that** on that end of the sleeve-like housing (1) which is facing away from the adjusting component, and/or on that end of the adjusting component which is facing away from the sleeve-like housing (1), there are disposed connecting pieces (3, 11) for fastening to the parts to be mutually adjusted.

15. Adjusting device according to one of the preceding claims, **characterized in that** the adjusting component is disposed on a flap at a distance from a pivot axis of the flap and the sleeve-like housing (1) is disposed on a fixed body component of a motor vehicle.

## Revendications

1. Dispositif de déplacement permettant de déplacer deux pièces l'une par rapport à l'autre, avec un boîtier fixe en forme de douille (1) et une pièce mobile (5) disposée dans le boîtier, qui sort par sa première zone terminale hors d'une ouverture frontale du boîtier en forme de douille, avec un entraînement rotatif (8, 9) par lequel la pièce mobile peut être déplacée axialement par rapport au boîtier en forme de douille au moyen d'un engrenage planétaire, dans lequel l'engrenage planétaire est un engrenage à circulation de billes et le boîtier en forme de douille est empêché de tourner et est pourvu d'une rainure en forme de filet (2) sur sa paroi cylindrique intérieure et dans lequel l'entraînement rotatif est disposé sur la pièce mobile également empêchée de tourner et comprend un arbre d'entraînement coaxial au boîtier en forme de douille et pourvu d'une rainure en forme de filet, dans lequel le boîtier en forme de douille et l'arbre d'entraînement sont couplés l'un à l'autre par des billes placées dans les rainures en forme de filet, dans lequel la pièce mobile est un tube mobile (5) qui sort de façon étanche hors du boîtier en forme de douille (1) et est fermé à son extrémité sortant hors du boîtier en forme de douille (1), **caractérisé en ce que** l'entraînement rotatif est disposé à l'intérieur du tube mobile (5) et **en ce que** l'espace intérieur du boîtier en forme de douille (1) est rempli d'un gaz déjà sous pression ou la pièce mobile est sollicitée par un ressort de pression dans le sens de la sortie.

2. Dispositif de déplacement permettant de déplacer deux pièces l'une par rapport à l'autre, avec un boîtier fixe en forme de douille et une pièce mobile (5) disposée dans le boîtier, qui sort par sa première zone terminale hors d'une ouverture frontale du boîtier en forme de douille, avec un entraînement rotatif (8, 9) par lequel la pièce mobile peut être déplacée axialement par rapport au boîtier en forme de douille au moyen d'un engrenage planétaire, dans lequel l'engrenage planétaire est un engrenage à rouleaux planétaires (15) et le boîtier en forme de douille est empêché de tourner et est pourvu d'un filet sur sa paroi cylindrique intérieure et dans lequel l'entraînement rotatif est disposé sur la pièce mobile également empêchée de tourner et comprend un arbre d'entraînement coaxial au boîtier en forme de douille, par lequel un ou plusieurs rouleaux planétaires peuvent être entraînés en rotation autour de l'axe longitudinal du boîtier en forme de douille ou d'axes parallèles à celui-ci, sur lesquels les rouleaux planétaires pourvus de gorges correspondant au profil du filet sont chaque fois montés en rotation libre et s'engagent avec leurs gorges dans le filet du boîtier en forme de douille, dans lequel la pièce mobile est un tube mobile (5) qui sort de façon étanche hors du boîtier en forme de douille (1) et est fermé à son extrémité sortant hors du boîtier en forme de douille (1), **caractérisé en ce que** l'entraînement rotatif est disposé à l'intérieur du tube mobile (5) et **en ce que** l'espace intérieur du boîtier en forme de douille (1) est rempli d'un gaz déjà sous pression ou la pièce mobile est sollicitée par un ressort de pression dans le sens de la sortie.

3. Dispositif de déplacement selon la revendication 2, **caractérisé en ce qu'**une cage de rouleaux est montée en rotation libre autour de l'axe longitudinal (4), laquelle comprend les multiples axes (18) parallèles à l'axe longitudinal du boîtier en forme de douille (1), sur lesquels sont respectivement montés en rotation libre les rouleaux planétaires (20) pourvus des gorges (21) correspondant au profil du filet, qui peuvent être entraînés en rotation par un rouleau d'entraînement calé sur l'arbre d'entraînement.

4. Dispositif de déplacement selon la revendication 2, **caractérisé en ce qu'**une cage de rouleaux (14) peut être entraînée en rotation autour de l'axe longitudinal (4) par l'arbre d'entraînement coaxial (13), ladite cage comprenant les multiples axes (18) parallèles à l'axe longitudinal du boîtier en forme de douille (1), sur lesquels sont respectivement montés en rotation libre les rouleaux planétaires (20) pourvus des gorges (21) correspondant au profil du filet.

5. Dispositif de déplacement selon l'une quelconque des revendications 2 à 4, **caractérisé en ce que** les axes (18) sont répartis uniformément sur un cercle.

6. Dispositif de déplacement selon l'une quelconque des revendications précédentes, **caractérisé en ce que** l'entraînement rotatif est un moteur électrique, en particulier un moteur à courant continu (7).

7. Dispositif de déplacement selon l'une quelconque des revendications 3 à 6, **caractérisé en ce que** la cage de rouleaux (14) est supportée axialement sur le tube mobile (5) par un palier axial, en particulier un palier de roulement axial (19).

8. Dispositif de déplacement selon l'une quelconque des revendications 3 à 7, **caractérisé en ce que** la cage de rouleaux (14) comprend une plaque de cage (16), qui est calée sur l'arbre d'entraînement (13) et sur laquelle les axes s'étendant axialement (18) sont fixés par leur première zone terminale.

9. Dispositif de déplacement selon la revendication 8, **caractérisé en ce que** les extrémités des axes (18) opposées à la plaque de cage (16) sont fixées à une deuxième plaque de cage (17).

10. Dispositif de déplacement selon l'une quelconque des revendications 3 à 9, **caractérisé en ce que** la cage de rouleaux peut être entraînée en rotation par l'entraînement rotatif par l'intermédiaire d'un étage d'engrenages.

11. Dispositif de déplacement selon l'une quelconque des revendications précédentes, **caractérisé en ce qu'**une électronique de commande (23) pour la commande de l'entraînement rotatif est disposée dans le tube mobile (5).

12. Dispositif de déplacement selon la revendication 11, **caractérisé en ce qu'**un détecteur de température est disposé dans le tube mobile (5) pour détecter la température dans le dispositif de déplacement et dont le signal de sortie peut être envoyé à l'électronique de commande (23).

13. Dispositif de déplacement selon l'une quelconque des revendications précédentes, **caractérisé en ce qu'**un tachymètre est disposé dans le tube mobile (5) pour détecter les révolutions de l'arbre d'entraînement (13) ou de la cage de rouleaux.

14. Dispositif de déplacement selon l'une quelconque des revendications précédentes, **caractérisé en ce que** des pièces de raccordement (3, 11) sont disposées sur l'extrémité du boîtier en forme de douille (1) opposée à la pièce mobile et/ou sur l'extrémité de la pièce mobile opposée au boîtier en forme de douille (1) en vue de la fixation aux pièces à déplacer l'une par rapport à l'autre.

15. Dispositif de déplacement selon l'une quelconque des revendications précédentes, **caractérisé en ce que** la pièce mobile est disposée sur un clapet à une distance d'un axe de pivotement du clapet et le boîtier en forme de douille (1) est disposé sur une pièce fixe de la carrosserie d'un véhicule automobile.
